# EUROPEAN PATENT APPLICATION

(11) **EP 4 729 573 A1**
(43) Date of publication of application: **22.04.2026**
(21) Application number: 24209987.7
(22) Date of filing: 30.10.2024
(51) Int. Cl.: C08K 9/10, C08L 67/02, C08J 3/22

(54) **GERM-REPELLENT COMPOSITION AND PREPARATION METHOD THEREOF**

(30) Priority: 17.10.2024 US 202418919399
(71) Applicant: Nano and Advanced Materials Institute Limited, Shatin, New Territories (HK)
(72) Inventor: MENG, Wenjun, Hong Kong (HK); YAN, Jinsong, Hong Kong (HK); YU, Wai Hong, Hong Kong (HK)
(74) Representative: Huebner, Stefan Rolf

(57) **Abstract**

A germ-repellent composition and preparation method are disclosed in the present disclosure. The germ-repellent composition introduces germ-repellent properties into a copolyester suitable for food processing and enhances its germ-repellent structure. The germ-repellent composition comprises a bio-based copolyester and a functional modifier comprising a germ-repellant agent, a reinforcing filler, and a dispersing agent. The method comprises a step of mixing the bio-based copolyester with the functional modifier by thermal processing. The present application provides transparent, colorless, mechanically tough, and heat-resistant germ-repellent copolyester.

## Description

### TECHNICAL FIELD

The present application relates to the field of food-contact-safe articles and, in particular, relates to a germ-repellent composition and method for preparing the germ-repellent composition and article therefrom.

### BACKGROUND

In recent years, as living standards have risen and health consciousness has improved, there has been a growing demand for germ-repellent materials. This is particularly evident in antibacterial plastic products, which now play a significant role in everyday goods, including appliances such as refrigerators and air conditioners, as well as various food containers. The primary method for making plastics antibacterial is to add specific antiseptic or germicidal agents during the plastic granulation process.

Imparting antimicrobial properties in plastic material is not solely a subject of academic inquiry but also holds practical implications that are increasingly significant. Many active ingredients have been identified and studied for their ability to inhibit microbial growth, which has paved the way for innovative solutions in both consumer goods and industrial uses.

Antimicrobial polymers are now widely used in the manufacture of product packaging. Several plastic forming methods, such as injection molding, compression molding, thermoforming, blown film molding, extrusion blow molding, and extrusion profiles, are employed to create products that offer antimicrobial benefits. These manufacturing techniques ensure that plastics with antibacterial properties can be used in a wide array of applications, from simple containers to complex packaging solutions.

In the past decade, food processing and packaging technology has advanced significantly, and one of the most promising innovations is "active packaging." This involves incorporating compounds into the packaging materials that offer additional benefits, such as antioxidant or antimicrobial effects. Active packaging aims to not only contain food but also to extend its shelf life and enhance its safety by slowing down microbial growth while retaining the quality.

A traditional method for making plastic germ-resistant is by melt blending the base plastic material with hydrophilic fillers and antimicrobial agents. In the state of the art, a Chinese document CN112739763A relates to an antimicrobial plastic comprised of an anti-biofouling compound and a base plastic.

However, this technique of treating plastic with hydrophilic fillers and antimicrobial agents presents challenges. Specifically, although this technique promotes antimicrobial activity, it can negatively affect the mechanical and thermal properties of the plastic and may exhibit difficulty in dispersing within the base plastic material, thereby reducing the transparency of the base plastic material.

Additionally, it can be difficult to find a hydrophilic agent that is compatible with the specific plastic being used, which can lead to manufacturing difficulties. For instance, using an incompatible agent can cause slippage at the screw surface during the production process, which leads to inefficiencies and potentially compromises the quality of the final product.

Moreover, the hydrophilic agent may act as a plasticizer that can reduce the heat deflection temperature which allows the base plastic material to deform more easily under stress at lower temperatures, thereby reducing the ability to resist heat without deforming.

In light of the foregoing discussion, there exists a need for a composition and method that imparts germ-repellence into a base material that is also suitable for food processing and improves the germ-repellent structure of the base material which can address at least one of the above-discussed requirements.

### SUMMARY

Before the present composition and method and its components are summarized, it is to be understood that this disclosure is not limited to the composition and its arrangement as described, as there can be multiple possible embodiments which are not expressly illustrated in the present disclosure. The present application overcomes one or more shortcomings of the prior art and provides additional advantages discussed throughout the present disclosure. Additional features and advantages are realized through the techniques of the present disclosure. It is also to be understood that the terminology used in the description is for the purpose of describing the versions or embodiments only and is not intended to limit the scope of the present disclosure. This summary is not intended to identify essential features of the claimed subject matter nor is it intended for use in detecting or limiting the scope of the claimed subject matter.

In an embodiment, a germ-repellent composition is disclosed. The composition may include a bio-based copolyester and a functional modifier. Further, the functional modifier may include a reinforcing filler comprising at least one inorganic oxide, a dispersing agent encapsulating the reinforcing filler, and a dispersing agent including at least one stearate salt. The functional modifier may further include a germ-repellent agent that binds to the dispersing agent.

In another embodiment, a method for preparing a germ-repellent composition masterbatch is disclosed. The method may include a step of providing a bio-based copolyester. The method may further include a step of mixing the bio-based copolyester with a functional modifier to obtain a pre-blend. The functional modifier may include a reinforcing filler, a dispersing agent encapsulating the reinforcing filler, and a germ-repellent agent binding the dispersing agent. Further, the method may include a step of compounding of the pre-blend via thermal processing to obtain a germ-repellent composition masterbatch.

In yet another embodiment, a method of preparing a germ-repellent article is disclosed. The method may include a step of providing the germ-repellent composition masterbatch. The method may include a step of diluting the germ-repellent composition masterbatch with the bio-based copolyester via thermal processing to form a diluted germ-repellent composition, wherein dilution is carried out at a rate ranging from 1:2- 1:10. Further, the method may include a step of molding the diluted germ-repellent composition in a shape to obtain a copolyester germ-repellent article.

### BRIEF DESCRIPTION OF FIGURES

Having thus described the disclosure in general terms, references will now be made to the accompanying figures, wherein:
FIG. 1 illustrates a detailed view of the interaction between reinforcing filler, dispersing agent, and germ-repellent agent of a germ-repellent composition, in accordance with an embodiment of the present application.
FIG. 2 illustrates a flowchart depicting a method for preparing a germ-repellent composition masterbatch, in accordance with an embodiment of the present application.
FIG. 3 illustrates a flowchart depicting a method for preparing a germ-repellent article, in accordance with an embodiment of the present application.

It should be noted that the accompanying figures are intended to present illustrations of exemplary embodiments of the present disclosure. These figures are not intended to limit the scope of the present disclosure. It should also be noted that accompanying figures are not necessarily drawn to scale.

### DETAILED DESCRIPTION

Reference will now be made in more detail to embodiments, examples of which are illustrated in the accompanying drawings, wherein like reference numerals refer to like elements throughout the specification. In this regard, the present embodiments may have different forms and should not be construed as being limited to the descriptions set forth herein. Accordingly, the embodiments are merely described below, by referring to the figures, to explain aspects of embodiments of the present description. As used herein, the term "and/or" includes any and all combinations of one or more of the associated listed items. Throughout the present disclosure, the expression "at least one of a, b and c" indicates only a, only b, only c, both a and b, both a and c, both b and c, all of a, b, and c, or variations thereof.

The subject matter of the present application may include various modifications and various embodiments, and example embodiments will be illustrated in the drawings and described in more detail in the detailed description. Effects and features of the subject matter of the present disclosure, and implementation methods therefore will become clear with reference to the embodiments described herein below together with the drawings. The subject matter of the present application may, however, be embodied in many different forms and should not be construed as limited to the embodiments set forth herein.

Hereinafter, embodiments of the present application will be described in more detail with reference to the accompanying drawings. The same or corresponding elements will be denoted by the same reference numerals, and thus, redundant description thereof will not be repeated.

It will be understood that although the terms "first," "second," etc. may be used herein to describe various elements, these elements should not be limited by these terms. These terms are only used to distinguish one element from another.

An expression used in the singular may also encompass the expression of the plural, unless it has a clearly different meaning in the context.

In the following embodiments, it is to be understood that terms such as "including," "includes," "having," "comprises," and "comprising," are intended to indicate the existence of the features or elements disclosed in the specification and are not intended to preclude the possibility that one or more other features or elements may exist or may be added.

The present application relates to a germ-repellent composition (hereinafter interchangeably referred to as `composition', `GR composition') comprising a base copolyester along with filler, dispersing agent, and germ-repellent agent. The present application also relates to copolyester-based article comprising a germ-repellent composition. The composition meets the requirements for transparent, colorless, mechanically tough, and heat-resistant plastics.

In order to facilitate an understanding of the composition and/or article and/or product discussed herein, a number of terms are defined below. The terms defined below, as well as other terms used herein, should be construed to include the provided definitions, the ordinary and customary meaning of the terms, and any other implied meaning for the respective terms. Thus, the definitions below do not limit the meaning of these terms, but only provide exemplary definitions.

The term "bio-based copolyester" as used herein is a broad term and is to be given its ordinary and customary meaning to a person of ordinary skill in the art (and is not to be limited to a special or customized meaning), and furthermore refers without limitation to a base material comprising copolyester derived from renewable biological sources, such as plants, animals, or microorganisms, instead of fossil fuels.

The term "functional modifier" as used herein is a broad term and is to be given its ordinary and customary meaning to a person of ordinary skill in the art (and is not to be limited to a special or customized meaning), and furthermore refers without limitation to a substance or agent that alters or enhances the functionality or properties of the composition.

The term "reinforcing filler" as used herein is a broad term and is to be given its ordinary and customary meaning to a person of ordinary skill in the art (and is not to be limited to a special or customized meaning), and furthermore refers without limitation to an additive that improves the mechanical properties, such as strength, stiffness, or durability.

The term "dispersing agent" as used herein is a broad term and is to be given its ordinary and customary meaning to a person of ordinary skill in the art (and is not to be limited to a special or customized meaning), and furthermore refers without limitation to a substance that helps in evenly distributing particles in a liquid, preventing them from clumping together or forming granules.

The term "germ-repellent agent" as used herein is a broad term and is to be given its ordinary and customary meaning to a person of ordinary skill in the art (and is not to be limited to a special or customized meaning), and furthermore refers without limitation to a substance that prevents germs, such as bacteria, viruses, or fungi, from adhering to surfaces, reducing the risk of contamination or infection.

The term "antioxidant" as used herein is a broad term and is to be given its ordinary and customary meaning to a person of ordinary skill in the art (and is not to be limited to a special or customized meaning), and furthermore refers without limitation to a substance included in the composition that helps prevent or slow down oxidation.

The term "crosslinking agent" as used herein is a broad term and is to be given its ordinary and customary meaning to a person of ordinary skill in the art (and is not to be limited to a special or customized meaning), and furthermore refers without limitation to a substance that facilitates the formation of chemical bonds between polymer chains, enhancing the structure's strength, stability, and resistance to degradation.

The term "lubricating agent" as used herein is a broad term and is to be given its ordinary and customary meaning to a person of ordinary skill in the art (and is not to be limited to a special or customized meaning), and furthermore refers without limitation to a substance added to a mixture to reduce friction between surfaces, enhance flow, and improve the overall performance of the composition.

The term "mechanical property" as used herein is a broad term and is to be given its ordinary and customary meaning to a person of ordinary skill in the art (and is not to be limited to a special or customized meaning), and furthermore refers without limitation to the characteristics that describe how a material responds to mechanical forces to determine properties such as tensile strength, compressive strength, hardness, elasticity, ductility, and toughness.

The term "thermal property" as used herein is a broad term and is to be given its ordinary and customary meaning to a person of ordinary skill in the art (and is not to be limited to a special or customized meaning), and furthermore refers without limitation to the characteristics that describe how a material responds to heat, including its heat resistance to hot fill, thermal conductivity, specific heat capacity, thermal expansion, and thermal stability.

The term "optical property" as used herein is a broad term and is to be given its ordinary and customary meaning to a person of ordinary skill in the art (and is not to be limited to a special or customized meaning), and furthermore refers without limitation to the characteristics in which the composition interacts with light, including its ability to absorb, reflect, refract, scatter, or transmit light.

The term "germ repellent property" as used herein is a broad term and is to be given its ordinary and customary meaning to a person of ordinary skill in the art (and is not to be limited to a special or customized meaning), and furthermore refers without limitation to the ability of a material or formulation to inhibit the growth, survival, or adhesion of microorganisms, such as bacteria, viruses, and fungi.

The term "virgin base material" or "virgin copolyester' as used herein is a broad term and is to be given its ordinary and customary meaning to a person of ordinary skill in the art (and is not to be limited to a special or customized meaning), and furthermore refers without limitation to the copolyester without any additives or pure copolyester.

In an embodiment, the germ-repellent composition is disclosed herein. The composition may include a bio-based copolyester (interchangeably referred to as 'copolyester', `base material') and a functional modifier (interchangeably referred to as `modifier'). In one embodiment, the bio-based copolyester may be a terephthalic acid copolymer. The terephthalic acid copolymer may be a glycol-modified polyethylene terephthalate comprising terephthalic acid and at least one comonomer selected from the group consisting of 1,4:3,6-dianhydro-D-glucitol, 1,4-cyclohexane dimethanol, and 1,2-ethanediol. Herein, ECOZEN from SK chemicals is a preferred bio-based copolyester.

In one embodiment, the composition may include the bio-based copolyester in a range of 85-99 weight percentage and the functional modifier in a range of 1-15 weight percentage. In one embodiment, the composition may be composed of a bio-based copolyester as the base material, with no more than 10, preferably 5 weight percentage addition of modifiers based on 100 weight percentage of the composition. The modifier used herein may consist of an overall mass percentage of no more than 10 weight percentage based on 100 weight percentage of a masterbatch.

In an embodiment, the functional modifier may include a reinforcing filler (interchangeably referred to as 'fillers'). In one embodiment, the reinforcing filler may include, but not limited to, an inorganic oxide. In an embodiment, the inorganic oxide may be selected from zinc oxide, silicon oxide, and the like. In one exemplary embodiment, the reinforcing filler may be zinc oxide. Further, the reinforcing filler may have a particle size below 50 nm, preferably ranging from 10 - 50 nm, and more preferably 20-30 nm, which helps in retaining the transparency.

Herein, the particle size of the filler plays a significant role in affecting the material's light transmittance. When the particles are larger, they tend to scatter light more effectively, leading to a noticeable reduction in transparency. This scattering can cause a substantial decrease in the amount of light passing through the material, making transmittance highly sensitive to variations in filler size.

In an embodiment, the functional modifier may further include a dispersing agent that encapsulates the reinforcing filler. In one embodiment, the dispersing agent may include, but is not limited to a stearate salt. In one embodiment, the stearate salt may be selected from one or more metal stearates selected from calcium stearate, zinc stearate, and the like. In one exemplary embodiment, the stearate salt may be calcium stearate.

In an embodiment, the functional modifier may further comprise a germ-repellent agent that binds to the dispersing agent. In one embodiment, the germ-repellent agent may be selected from, but not limited to the group consisting of polyethylene glycol (PEG), polypropylene glycol, diglycidyl ether, sorbitol, polyoxyethylene ether of saturated fatty alcohols, and a combination thereof. In one preferred embodiment, the germ-repellent agent may be polyethylene glycol.

In an exemplary embodiment, the reinforcing fillers such as zinc oxide are encapsulated by calcium stearate groups providing a stearate shell to the fillers to prevent clustering in an organic environment. Additionally, the stearate shell attracts small germ-repellent agent molecules such as PEG to prevent the functional modifiers from acting as plasticizers in the base material. As a result, the strength and transparency of germ-repellent composition are minimally impacted compared to a virgin base material. Furthermore, the small germ-repellent agents attached to the stearate group and the reinforcing fillers help in maintaining a high heat deflection temperature compared to the virgin base materials.

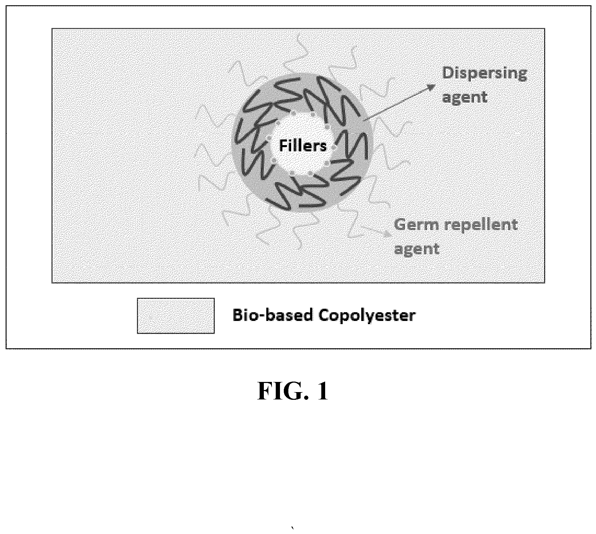

Now, referring to FIG. 1, a detailed view of the interaction between a reinforcing filler, a dispersing agent, and a germ-repellent agent of the proposed composition is illustrated. A dispersing agents-reinforcing fillers assembled structure to be compatibilized with copolyester is designed. The reinforcing filler is found to be well-dispersed in the copolyester and environment of the germ-repellent agent. This reduces surface energy and prevents aggregation, ensuring that the transparency of the composition remains unaffected.

In one embodiment, the germ-repellent agent may have a hydrophobic end and a hydrophilic end. The dispersing agent may bind to the hydrophobic end of the germ-repellent agent while the hydrophilic end of the germ-repellent agent may remain exposed to the bio-based copolyester.

In one exemplary embodiment, the hydrophobic end of the germ-repellent agent, specifically PEG is attracted to the stearate group, while the hydrophilic end remains exposed. This assembled structure prevents the functional modifiers from acting as plasticizers, which decreases the heat deflection temperature (HDT). The heat deflection temperature (HDT) refers to the temperature at which a material begins to deform under a specified load. This parameter is critical for food packaging and processing materials, ensuring they maintain structural integrity during high-temperature applications. The higher HDT of the GR composition indicates that the composition can withstand more heat without losing its shape, which is essential for safety and quality in food applications.

Moreover, by preventing aggregation the proposed composition addresses the issue of the composition becoming translucent or opaque after modification while inhibiting the germ-repellent modifiers from acting as plasticizers to aid in maintaining the HDT, making the modifiers food contact safe. Thus, the composition-derived articles can be considered food grade.

In some embodiments, the functional modifier comprises 1-2 weight percentage of the germ-repellent agent, 0-0.05 weight percentage of the reinforcing filler; and 0-0.2 weight percentage of the dispersing agent. In one exemplary embodiment, the functional modifier comprises 1-1.5 weight percentage of the germ-repellent agent, 0-0.02 weight percentage of the reinforcing filler, and 0.05-0.15 weight percentage of the dispersing agent.

A lower concentration of germ-repellent agents may result in reduced effectiveness, while a higher concentration can negatively impact the heat deflection temperature (HDT) and other mechanical properties. Similarly, an increased concentration of the reinforcing filler may lead to clustering rather than self-assembly with dispersing agents. The amount of dispersing agents required is directly related to the quantity of the reinforcing filler to facilitate the formation of a self-assembled structure.

In some embodiments, the functional modifier further may comprise an antioxidant, a crosslinking agent, and a lubricating agent. In one embodiment, the antioxidant may be selected from at least one of phosphite and benzofuranone. In one embodiment, the antioxidant may be present in a range of 0-0.1, preferably 0-0.05 weight percentage based on 100 weight percentage of the composition. In one embodiment, the crosslinking agent may be selected from at least one of Polypropylene glycol) diglycidyl ether (PPGDE) and Diglycidyl ether of bisphenol A. In one embodiment, the crosslinking agent may be present in a range of 0-1, preferably 0.3-0.5 weight percentage based on 100 weight percentage of the composition. In one embodiment, the lubricating agent may be an Incromax 100 present in the range of 0-0.5, preferably 0.2-0.3 weight percentage based on 100 weight percentage based on 100 weight percentage of the composition.

In an exemplary embodiment, the germ-repellent composition tested in accordance with modified test protocol ISO 22196: 2011 exhibited a germ-repellent property with more than 90% bacterial adhesion reduction in comparison with the relative virgin copolyester.

In an exemplary embodiment, the germ-repellent composition exhibited a mechanical property with less than 10% reduction or no reduction. In this embodiment, the mechanical property includes tensile strength, impact strength, elongation at break, and Izod impact strength. The impact strength (Izod impact strength) of the composition is measured in accordance with ASTM D256. The tensile strength and elongation at break of the composition are evaluated following the ASTM standard.

In an exemplary embodiment, the germ-repellent composition tested in accordance with ISO 75-test method exhibited a heat resistance i.e. a heat deflection temperature with less than 5 degrees Celsius, or no reduction.

In an exemplary embodiment, the germ-repellent composition tested in accordance with ASTM D1003-standard test method exhibited an optical property i.e. light transmittance than 5% reduction or no reduction.

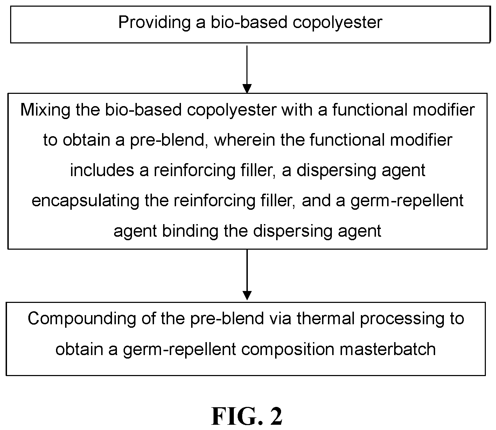

Referring to FIG. 2, a method for preparing the germ-repellent composition masterbatch is depicted, in accordance with an embodiment of the present application.

The method may include a step of providing a bio-based copolyester. The method may further include a step of mixing the bio-based copolyester with a functional modifier to obtain a pre-blend. In an embodiment, the functional modifier may include a reinforcing filler, a dispersing agent encapsulating the reinforcing filler, and a germ-repellent agent binding the dispersing agent.

In some embodiments, the method may include a step of compounding of the pre-blend via thermal processing to obtain a germ-repellent composition masterbatch (interchangeably referred to as 'masterbatch'). In some embodiments, the thermal processing may be selected from the group comprising injection molding, reactive extrusion, twin-screw extrusion, internal mixing, and the like. In an exemplary embodiment, twin screw extrusion may be performed for compounding of the pre-blend.

In an embodiment, the germ-repellent composition masterbatch essentially consists of the dispersing agent having an overall mass percentage of no more than 10% in the masterbatch. More specifically the loading of the germ-repellent agent has the loading percentage within 10%.

In one embodiment, the twin screw extrusion may be carried out at,
a temperature ranging from 100-280 °C;
a feeding rate in the range of 7-12 %;
a screw speed in the range of 70-120 rpm;
a torque in the range of 60-70 Nm.

These factors pertain to the processability of base material. The temperature enables the base material to be heated to the point where the material melts can mix with additives, facilitating reactions or self-assembly. The feeding rate and screw speed regulate the amount of masterbatch produced by the twin-screw extruder (TSE). For safety and optimal equipment performance, the torque applied to the twin screws is maintained within appropriate limits.

In an exemplary embodiment, the masterbatch is fabricated by the twin screw extrusion, in which the dispersing agent such as calcium stearate self-assembles with the reinforcing fillers easily before dispersing in the bio-based copolyesters such as PCTG. Since the dispersing agent is more friendly to germ-repellent agents such as PEG than PCTG molecules, the PEG molecules are attracted in the masterbatch.

Referring to FIG. 1 the assembled structure after thermal processing (i.e., twin-screw extrusion) of the modifiers with the base material is illustrated. The self-assembled structure preserves the heat deflection temperature (HDT) and transparency (optical properties) of the base materials while enhancing their germ-repellent properties

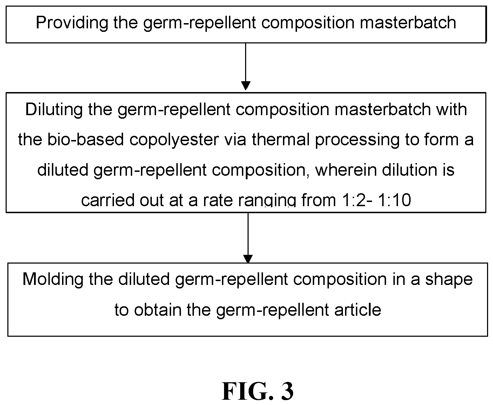

Referring to FIG. 3, a method for preparing a germ-repellent article is depicted. The method may include a step of providing the germ-repellent composition masterbatch. Further, the germ-repellent composition masterbatch may be diluted with the bio-based copolyester via a thermal processing to form a diluted germ-repellent composition. The thermal processing of the article can be selected from injection molding, blow molding, tube extrusion, and blown-film extrusion, and more preferably injection molding. In an embodiment, the dilution may be carried out at a rate ranging from 1:2- 1: 10.

Further, the method may include a step of molding the diluted germ-repellent composition in a shape to obtain the germ-repellent article (interchangeably referred to as 'article'). In an embodiment, the dispersing agent in the diluted germ-repellent composition essentially consists of the dispersing agent having an overall mass percentage of no more than 3% in the masterbatch.

In an exemplary embodiment, the articles of germ-repellent composition may be fabricated from the master batch with a dilution rate of 1:3, 1:4, and 1:9, the modifiers used herein may consist of an overall mass percentage of no more than 2.5%, 2% and 1%, respectively.

Thus, the dilution of the masterbatch is performed on injection molding to fabricate the articles, to obtain as-assembled structures maintaining the composition with germ-repellence performance.

### Example 1: Control

A bio-based copolyester, ECOZEN from SK Chemicals, is used as a control.

### Example 2: Germ-repellent composition A

98.05% ECOZEN is blended via twin extrusion with additives including reinforcing fillers such as Aerosol R8200, a lubricating agent such as Incromax 100, germ-repellent agents such as Eumulgin B2 and Atlas G1096 (with reference to US20230374292A1) and others as discussed in Table 1 to obtain a Germ-repellent composition A. The germ-repellent agents form a hydration layer on the sample surface to repel the organism.

### Example 3: Germ-repellent composition B

97.07% ECOZEN is blended via twin extrusion with other additives comprising a lubricating agent such as Incromax 100, cross-linking agent such as Polypropylene glycol) diglycidyl ether, and germ-repellent agent such as Pluronic L35 as discussed in Table 1 to obtain a Germ-repellent composition B.

### Example 4: Germ-repellent composition C

Step I: Mix the functional modifiers including germ-repellent agents, antioxidants such as Chitec REVONOX 608 and Irgafos 168, dispersing agents such as calcium stearate, and reinforcing fillers specifically zinc oxide, germ-repellent agent such as Pluronic L35, Atlas G1086 with the 97.07% ECOZEN (i.e. the biomass-based copolyester) via twin extrusion at room temperature to obtain a pre-blend.

Step II: Fabricate the germ-repellent composition masterbatch by compounding the pre-blend prepared in Step I with a twin-screw extruder. (Model: Thermo Scientiic^{™} HAAKE^{™} Rheomex PTW 16 OS Twin-Screw Extruder, parameters are listed in table 2).

The twin screw extruder comprises 10 zones, wherein the temperature distribute from zone 1 (feeder side) to zone 10 as the condition to fabricate the compositions. Herein, the lower temperature zones are for feeding and heating whereas the higher temperature zones are for melting, mixing and reaction (if any). Step III: Mix the germ-repellent composition masterbatch prepared in Step II with the base material to obtain a diluted germ-repellent composition.

Step IV: Fabricate germ-repellent articles using an injection molding machine of diluted germ-repellent composition (Model in lab: Arburg 270C 400-100 Injection Molding Machine, parameters are listed in table 3). The germ-repellent articles such as food water bottles and food containers can also be fabricated through the conventional injection molding and blow molding processes.

**Table 1: Composition of the germ-repellant composition**

| **Composition** | **Content** |
|---|---|
| ECOZEN (control) | 100% bio-based copolyester |
| Germ-repellent composition A | 0.78% Eumulgin B2 + 0.78% Atlas G1096 + 0.39% Incromax 100 + 0.1% Aerosil R8200 |
| Germ-repellent composition B | 0.49 % Polypropylene glycol) diglycidyl ether Mn 640 +1.95% Pluronic L35 + 0.49% Incromax 100 |
| Germ-repellent composition C | 0.49% Atlas G1086 + 0.74% Pluronic L35 + 0.10% Calcium stearate+ 0.05% ZnO + 0.025% Chitec REVONOX 608 + 0.025% Irgafos 168 |

**Table 2: Parameters for twin extrusion method**

| **Composition** | **Temperature (°C)** | **Feeding rate (%)** | **Screw speed (rpm)** | **Torque (Nm)** |
|---|---|---|---|---|
| Germ-repellent composition A | (feeder) 100, 255, 260, 260, 260, 260, 260, 260,260, 250 | 5 | 200-220 | 40 |
| Germ-repellent composition B | (feeder) 120, 250, 250, 250, 250, 250, 250, 250,250, 250 | 12 | 80 | 40 |
| Germ-repellent composition C | (feeder) 120, 200, 240, 250, 260, 260, 260, 260,260, 260 | 10 | 100 | 65 |

**Table 3: Parameters for injection molding**

| **Composition** | **Temperature (°C)** | **Injection Pressure (Bar)** | **Hold pressure (Bar)** | **Mold temperature (°C)** |
|---|---|---|---|---|
| Germ-repellent composition A | 240, 255, 255, 255 (Nozzle) | 1200 (1st), 1200 (2nd) | 1000 for 1 s, 950 for 4 s | 45 |
| Germ-repellent composition B | 250, 260, 260, 250 (Nozzle) | 1250 (1st), 1250 (2nd) | 1000 for 1 s, 950 for 4 s | 45 |
| Germ-repellent composition C | 260, 265, 265, 260 (Nozzle) | 1000 (1st), 1000 (2nd) | 1000 for 1 s, 950 for 4 s | 60 |

Further Control, Germ-repellent compositions A, B & C have been subjected to the following tests to determine the germ repellency, mechanical optical and heat resistance property:
- Modified test protocol with reference to ISO 22196: 2011.
- Transmittance test: ASTM D1003-Standard Test Method for Haze and Luminous Transmittance of Transparent material.
- HDT test: ISO 75-Determination of the temperature of deflection under load
- Impact strength/Izod impact strength: ASTM D256
- Tensile strength/elongation at break: ASTM D638.

**Table 4: Test results for the Control, Germ-repellent compositions A, B&C**

| **Composition** | **GR Efficacy** | **Transmittance and appearance** | **HDT (°C)** |
|---|---|---|---|
| ECOZEN (control) | N/A | 88%, colourless and clear | 93 |
| Germ-repellent composition A | No effect (*S*. *aureus*)*,* 99% (*E*. *coli*) | 81%, Grey and cloudy | 85 |
| Germ-repellent composition B | 88.0% (*S. aureus*), 90.5% (*E. coli*) | 85%, colourless and clear | 84 |
| Germ-repellent composition C | 90.8% (*S. aureus*), 94.9% (*E. coli*) | 85%, colourless and clear | 91 |

The efficacy of Germ-repellent composition C in repelling germs is noteworthy, exhibiting over 90% efficacy against both strains. Its transmittance, appearance, and HDT are comparable to the control. In contrast, Germ-repellent composition A, which utilizes silicas as reinforcing filler, displays a visibly grey and cloudy appearance. Furthermore, Germ-repellent composition B, lacking reinforcing fillers, exhibits low HDT due to the germ-repellent agents.

The aforementioned tests demonstrate that the claimed composition displays improved optical, mechanical, thermal and germ-repellent properties, along with enhanced transparency. Consequently, it can be inferred that the composition disclosed herein is suitable for applications in the food packaging and processing industry. Moreover, the bio-based copolyester used in the composition meets the sustainability requirement and supports the circular economy through the use of renewable materials, thus complying with environmental regulations.

While one or more embodiments have been described with reference to the figures, it will be understood by those of ordinary skill in the art that various changes in form and details may be made therein without departing from the scope of the present application as defined by the following claims, and equivalents thereof.

Although implementations for a germ-repellent composition and a preparation method thereof have been described in language specific to structural features, it is to be understood that the appended claims are not necessarily limited to the specific features described. Rather, the specific features are disclosed as examples of implementations of the germ-repellent composition and the preparation method thereof.

## Claims

1. A germ-repellent composition, comprising:
a bio-based copolyester; and
a functional modifier comprising,
a reinforcing filler comprising at least one inorganic oxide,
a dispersing agent encapsulating the reinforcing filler, wherein the dispersing agent comprises at least one stearate salt, and
a germ-repellent agent, wherein the germ-repellent agent binds to the dispersing agent.

2. The composition of claim 1, wherein the bio-based copolyester is a terephthalic acid copolymer.

3. The composition of claim 2, wherein the terephthalic acid copolymer comprises of terephthalic acid and at least one comonomer selected from the group consisting of 1,4:3,6-dianhydro-D-glucitol, 1,4-cyclohexane dimethanol, and 1,2-ethanediol.

4. The composition of claim 1, wherein the inorganic oxide is selected from zinc oxide and silicon oxide.

5. The composition of claim 1, wherein the stearate salt is selected from calcium stearate and zinc stearate.

6. The composition of claim 1, wherein the germ-repellent agent is selected from the group consisting of polyethylene glycol, polypropylene glycol, diglycidyl ether, sorbitol, polyoxyethylene ether of saturated fatty alcohols, and a combination thereof.

7. The composition of claim 1, wherein the functional modifier further comprises:
an antioxidant selected from at least one of phosphite and benzofuranone in a range of 0-0.1 weight percentage; and
a lubricating agent in the range of 0-0.5 weight percentage.

8. The composition of claim 1, wherein the reinforcing filler has a particle size ranging from 10 - 50 nm.

9. The composition of claim 1, comprising:
the bio-based copolyester in a range of 85-99 weight percentage; and
the functional modifier in a range of 1-15 weight percentage.

10. The composition of claim 1, wherein the functional modifier comprises:
the germ-repellent agent in a range of 1-2 weight percentage;
the reinforcing filler in a range of 0-0.1 weight percentage; and
the dispersing agent in a range of 0-0.2 weight percentage.

11. The composition of claim 1, wherein the dispersing agent binds to a hydrophobic end of the germ-repellent agent while a hydrophilic end of the germ-repellent agent remains exposed to the bio-based copolyester.

12. The composition of claim 1, wherein the germ-repellent composition exhibits a germ-repellent property with more than 90% bacterial adhesion reduction based upon testing with a test protocol with reference to modified ISO 22196: 2011 standard.

13. The composition of claim 1, wherein the germ-repellent composition compared with the relative virgin copolyester exhibits a mechanical property with less than 10% reduction, or no reduction based upon testing with a test protocol with reference to ASTM D256 and ASTM D638 standard, wherein the mechanical property is selected from at least one of tensile strength, elongation at break, and Izod impact strength.

14. The composition of claim 1, wherein the germ-repellent composition compared with the relative virgin copolyester exhibits:
heat resistance with less than 5 Celsius degrees reduction or no reduction, wherein heat resistance is heat deflection temperature, on testing with ISO 75-test method; and
an optical property than 5% reduction, or no reduction, and the optical property is light transmittance based upon testing in accordance with ASTM D1003 -standard test method.

15. A method for preparing a germ-repellent composition masterbatch, comprising:
providing a bio-based copolyester;
mixing the bio-based copolyester with a functional modifier to obtain a pre-blend, wherein the functional modifier comprises a reinforcing filler, a dispersing agent encapsulating the reinforcing filler, and a germ-repellent agent binding the dispersing agent; and
compounding of the pre-blend via thermal processing to obtain a germ-repellent composition masterbatch.

16. The method of claim 15, wherein the thermal processing is selected from the group comprising reactive extrusion, twin-screw extrusion, and internal mixing.

17. The method of claim 15, wherein the thermal processing is a twin-screw extrusion performed at,
a temperature ranging from 100-280 °C;
a feeding rate in the range of 7-12 %;
a screw speed in the range of 70-120 rpm; and
a torque in the range of 60-70 Nm.

18. The method of claim 15, wherein the germ-repellent composition masterbatch comprises the germ-repellent agent having an overall mass percentage of no more than 10% in the masterbatch.

19. A method for preparing a germ-repellent article, comprising:
providing the germ-repellent composition masterbatch of claim 15;
diluting the germ-repellent composition masterbatch with the bio-based copolyester via a thermal processing to form a diluted germ-repellent composition, wherein dilution is carried out at a rate ranging from 1:2- 1:10; and
molding the diluted germ-repellent composition in a shape to obtain the germ-repellent article.

20. The method of claim 19, wherein the germ-repellent agent in the diluted germ-repellent composition comprises an overall mass percentage of no more than 3% in the masterbatch.

## Amended claims

### Amended claims in accordance with Rule 137(2) EPC.

1. A germ-repellent composition, comprising:
a bio-based copolyester; and
a functional modifier comprising,
a reinforcing filler comprising at least one inorganic oxide,
a dispersing agent encapsulating the reinforcing filler, wherein the dispersing agent comprises at least one stearate salt selected from calcium stearate and zinc stearate, and
a germ-repellent agent, wherein the germ-repellent agent binds to the dispersing agent and wherein the germ-repellent agent is selected from the group consisting of polyethylene glycol, polypropylene glycol, diglycidyl ether, sorbitol, polyoxyethylene ether of saturated fatty alcohols, and a combination thereof.

2. The composition of claim 1, wherein the bio-based copolyester is a terephthalic acid copolymer.

3. The composition of claim 2, wherein the terephthalic acid copolymer comprises of terephthalic acid and at least one comonomer selected from the group consisting of 1,4:3,6-dianhydro-D-glucitol, 1,4-cyclohexane dimethanol, and 1,2-ethanediol.

4. The composition of claim 1, wherein the inorganic oxide is selected from zinc oxide and silicon oxide.

5. The composition of claim 1, wherein the functional modifier further comprises:
an antioxidant selected from at least one of phosphite and benzofuranone in a range of 0-0.1 weight percentage; and
a lubricating agent in the range of 0-0.5 weight percentage.

6. The composition of claim 1, wherein the reinforcing filler has a particle size ranging from 10 - 50 nm.

7. The composition of claim 1, comprising:
the bio-based copolyester in a range of 85-99 weight percentage; and
the functional modifier in a range of 1-15 weight percentage.

8. The composition of claim 1, wherein the functional modifier comprises:
the germ-repellent agent in a range of 1-2 weight percentage;
the reinforcing filler in a range of 0-0.1 weight percentage; and
the dispersing agent in a range of 0-0.2 weight percentage.

9. The composition of claim 1, wherein the dispersing agent binds to a hydrophobic end of the germ-repellent agent while a hydrophilic end of the germ-repellent agent remains exposed to the bio-based copolyester.

10. The composition of claim 1, wherein the germ-repellent composition exhibits a germ-repellent property with more than 90% bacterial adhesion reduction based upon testing with a test protocol with reference to modified ISO 22196: 2011 standard.

11. The composition of claim 1, wherein the germ-repellent composition compared with the relative virgin copolyester exhibits a mechanical property with less than 10 % reduction, or no reduction based upon testing with a test protocol with reference to ASTM D256 and ASTM D638 standard, wherein the mechanical property is selected from at least one of tensile strength, elongation at break, and Izod impact strength.

12. The composition of claim 1, wherein the germ-repellent composition compared with the relative virgin copolyester exhibits:
heat resistance with less than 5 Celsius degrees reduction or no reduction, wherein heat resistance is heat deflection temperature, on testing with ISO 75-test method; and
an optical property than 5 % reduction, or no reduction, and the optical property is light transmittance based upon testing in accordance with ASTM D1003-standard test method.

13. A method for preparing a germ-repellent composition masterbatch, comprising:
providing a bio-based copolyester;
mixing the bio-based copolyester with a functional modifier to obtain a pre-blend, wherein the functional modifier comprises a reinforcing filler, a dispersing agent encapsulating the reinforcing filler, and a germ-repellent agent binding the dispersing agent; and
compounding of the pre-blend via thermal processing to obtain a germ-repellent composition masterbatch.

14. The method of claim 13, wherein the thermal processing is selected from the group comprising reactive extrusion, twin-screw extrusion, and internal mixing.

15. The method of claim 13, wherein the thermal processing is a twin-screw extrusion performed at,
a temperature ranging from 100-280 °C;
a feeding rate in the range of 7-12 %;
a screw speed in the range of 70-120 rpm; and
a torque in the range of 60-70 Nm.

16. The method of claim 13, wherein the germ-repellent composition masterbatch comprises the germ-repellent agent having an overall mass percentage of no more than 10% in the masterbatch.

17. A method for preparing a germ-repellent article, comprising:
providing the germ-repellent composition masterbatch of claim 13;
diluting the germ-repellent composition masterbatch with the bio-based copolyester via a thermal processing to form a diluted germ-repellent composition, wherein dilution is carried out at a rate ranging from 1:2- 1:10; and
molding the diluted germ-repellent composition in a shape to obtain the germ-repellent article.

18. The method of claim 17, wherein the germ-repellent agent in the diluted germ-repellent composition comprises an overall mass percentage of no more than 3 % in the masterbatch.
